# EUROPÄISCHE PATENTSCHRIFT

(11) **EP 1 736 681 B1**
(45) Veröffentlichungstag und Bekanntmachung des Hinweises auf die Patenterteilung: **16.05.2012**
(21) Anmeldenummer: 06001583.1
(22) Anmeldetag: 26.01.2006
(51) Int. Cl.: F16F 1/38

(54) **Buchsenlager mit radialem und/oder axialem Anschlag und Verfahren zur Erzeugung eines Axialanschlags bei einem Buchsenlager**
Bushing with radial and/or axial stop and method for the production of an axial stop for a bushing
Manchon avec butée radiale et/ou axiale et procédé pour la réalisation d'une butée axiale d'un manchon

(30) Priorität: 23.06.2005 DE 102005029614
(43) Veröffentlichungstag der Anmeldung: 27.12.2006
(73) Patentinhaber: ZF FRIEDRICHSHAFEN Aktiengesellschaft, 88038 Friedrichshafen (DE)
(72) Erfinder: Kümper, Bernd, 32369 Rahden (DE)

(56) Entgegenhaltungen:
- EP-A- 0 132 502
- EP-A- 0 472 823
- EP-A- 1 430 969
- DE-U- 1 983 947
- DE-U1- 8 615 903
- US-A- 2 122 839

## Beschreibung

Die Erfindung betrifft ein Buchsenlager, bei dem der Federweg des elastomeren Lagerkörpers in radialer und/oder axialer Richtung durch mindestens einen Anschlag begrenzt ist. Weiterhin betrifft die Erfindung ein Verfahren zur Erzeugung eines entsprechend ausgebildeten Axialanschlags bei einem Buchsenlager.

Elastomere Gummilager, wie sie vor allem im Fahrzeugbau, beispielsweise im Bereich der Radaufhängung, in großen Stückzahlen eingesetzt werden, sind häufig mit Axialanschlägen ausgestattet. Sofern ihr elastomerer Lagerkörper zur Erreichung einer vorgegebenen radialen Kennung Hohlräume, wie Nieren oder dergleichen aufweist, sind in der Regel zudem radiale Anschläge für den Lagerkörper vorgesehen. Durch die Anschläge wird der Federweg des elastomeren Lagerkörpers beim Auftreten axialer beziehungsweise radialer Belastungen begrenzt. Hierdurch wird verhindert, dass der Lagerkörper durch zu starke Verformungen beziehungsweise Überdehnungen zerstört wird.
Gattungsgemäße Buchsenlager bestehen im Wesentlichen aus einem zumeist metallischen Innenteil, einem mit dem Innenteil durch Vulkanisation verbundenen elastomeren Lagerkörper und einer die beiden vorgenannten Teile aufnehmenden Außenhülse, wobei auch die Außenhülse durch Vulkanisation mit dem Lagerkörper verbunden sein kann. Bei der Montage am bestimmungsgemäßen Einbauort wird das Lager im Allgemeinen mit seiner Außenhülse in ein dafür vorgesehenes Aufnahmeauge eingedrückt.
Radiale Anschläge werden beispielsweise durch eine spezielle Formgebung des Innenteils beziehungsweise eine Konturierung der Mantelfläche des Innenteils erzeugt. Allerdings erhöhen eine von der Zylinderform abweichende Formgebung des Innenteils beziehungsweise dessen Ausbildung mit variablem Außendurchmesser die Herstellungskosten eines Buchsenlagers. Weiterhin ist es bekannt, zur Ausbildung von Radialanschlägen bei Lagern mit innerhalb des elastomeren Lagerkörpers ausgebildeten Hohlräumen zusätzliche Elemente aus Kunststoff oder Metall einzulegen, welche zu ihrer Fixierung beispielsweise in Form eines Clips in die Hohlräume eingeklickt werden. Durch diese zusätzlichen Lagerteile erhöht sich jedoch in ungünstiger Weise der Montageaufwand für die in dieser Weise gestalteten Lager.
Zur Ausbildung von Axialanschlägen für den Lagerkörper sind ebenfalls unterschiedliche Möglichkeiten bekannt geworden. Vielfach wird zur Realisierung eines Axialanschlags am stirnseitigen Ende der Außenhülse ein radial nach außen kragender Flansch ausgebildet. Sofern jedoch beiderseitig ein entsprechender Flansch zur Ausbildung eines Axialanschlags vorgesehen wird, ist es nicht mehr ohne weiteres möglich, das Lager in ein bestimmungsgemäßes Aufnahmeauge einzufügen, da das Lager dann an beiden axialen Enden einen größeren Außendurchmesser aufweist als die übrigen vom Aufnahmeauge aufzunehmenden Bereiche seiner Außenhülse. Dieses Problem wird gemäß einer für Lager mit beidseitigem Axialanschlag aus der Praxis bekannten Lösung dadurch umgangen, dass das Lager in axialer Richtung zweigeteilt ausgebildet wird. Beide Lagerteile werden von jeweils einer Seite in das Lagerauge eingefügt und im Zuge dessen miteinander verbunden. Allerdings ist es unter Kostengesichtspunkten als nachteilig anzusehen, dass in diesem Falle für eine Lagerstelle zwei Teile zur Realisierung eines Lagers benötigt werden. Zudem erhöht sich der Montageaufwand beim bestimmungsgemäßen Einbau des Lagers, was sowohl unter Produktivitäts- als auch Kostengesichtspunkten als nachteilig anzuseben ist.

Die EP 0 472 823 A1 beschreibt ein elastisches Dämpferlager für die Befestigung eines aus einem Teleskop-Schwingungsdämpfer und einer Schraubenfeder bestehenden Federbeines an der Karosserie eines Fahrzeugs, mit einem an der Karosserie befestigten Ringflansch, der ein mit einer Innen- und Außenbüchse versehenes, plastisches Lager zur Befestigung einer Kolbenstange eines Teleskop-Schwingungsdämpfer trägt und wobei die Kolbenstange eine, mit dem elastischen Lager zusammenarbeitende Anschlagscheibe aufweist, wobei die Außenbüchse eine radial in den Elastomerkörper des elastischen Lagers hineinragende Sicke aufweist und dass data elastische Lager auf der, zwischen der Sicke und der Anschlagscheibe angeordneten Stirnseite einen als Anschlag ausgebildeten, gegenüber der Innen- und Außenbüchse vorstehenden, Wulst aufweist.

Die DE 86 15 903 U 1 beschreibt ein elastisches Gummi-Metaulager zur Lagerung oder Aufhängung von Kraftfahrzeug-Motorteilen, Getrieben oder Maschinenteilen unter Verwendung von zwei kreisförmigen Metallscheiben, die durch eine konusförmige Hülse auf Abstand gehalten, mittels einer Schraubbolzenverbindung gegeneinander verspannt sind und an einem Gummiteil angrenzen, sowie mit einem radial auf Abstand von der Hülse angeordneten Auflagerflansch in Form eines unten offenen Tellers, dessen radial nach außen abgebogener oberer Rand auf der oberen Fläche eines fahrzeugfesten oder stationären Lagerhalters aufsitzt, wobei die am Gummiteil angrenzenden kreisförmigen Scheiben als Formscheiben ausgebildet sind und jeweils eine kreisringförmige, aus ihrer Ebene vorstehende sickenförmige Aufwölbung aufweisen, die sich beim Einfedern des zu lagernden Teils in das Gummiteil einpressen und an die sich bei Entlastung oder Rückfederung das Gummiteil anpresst.

Durch die DE 28 16 742 A1 ist ein einteiliges Buchsenlager bekannt geworden, bei dem zur Umgehung des geschilderten Problems an einem der axialen. Enden ein radial nach außen weisender Flansch, hingegen an dem anderen axialen Ende ein nach innen weisender, so genannter innerer Flansch ausgebildet ist. Hierbei ist es jedoch als nachteilig anzusehen, dass sich das Lager aufgrund der Verschiedenartigkeit der beiden Axialanschläge gegenüber einerseits aus positiver axialen Richtung und andererseits aus negativer axialer Richtung eingetragenen Kräften unterschiedlich verhält. Zudem ergeben sich durch den inneren Flansch, dessen Flanschflächen radial nach innen weisen, Einschränkungen im Hinblick auf die geometrische Gestaltung und Konturierung des elastomeren Lagerkörpers. Dadurch wird unter anderem der Kalibrierfaktor zur Einstellung der Vorspannung im elastomeren Lagerkörpers in nachteiliger Weise begrenzt. Auch die Kadarnik und die Torsion des Lagers können hierdurch nicht im gewünschten Maße beeinflusst werden. Entsprechend gestaltete Lager weisen daher in der Regel eine hohe Kadamik und Torsion auf, wodurch die Belastung des Lagerkörpers bei kadamischen und torsionalen Beanspruchungen erhöht und folglich seine Standzeit herabgesetzt wird. Außerdem ist es nicht möglich, Nierenkonturen, welche häufig zur Einstellung des radialen Dämpfungsverhaltens des Lagers eingesetzt werden, so auszubilden, dass diese sich durchgängig über die gesamte axiale Ausdehnung des Lagers erstrecken. Durch die im Hinblick auf die axialen Lagerenden unsymmetrische Ausbildung derartiger Lager besteht außerdem die Gefahr einer Schiefstellung des Innenteils, welche durch Abschrecken ("quench and temper") aufwändig behoben werden muss.

Aufgabe der Erfindung ist es, ein elastomeres Buchsenlager mit mindestens einem radialen und/oder axialen Anschlag so auszubilden, dass die vorstehend genannten Nachteile vermieden werden. Das Lager soll insbesondere einen einfachen Aufbau besitzen und mit einem vergleichsweise geringen Aufwand zu fertigen sein. Eventuelle Axialanschläge sollen vorzugsweise so ausgebildet sein, dass das Lager auch im Falle einer Ausbildung mit beiderseitigem Axialanschlag mit geringem Aufwand in einem Aufnahmeauge zu montieren ist. Die Aufgabe besteht weiterhin darin, ein Verfahren zur Erzeugung entsprechender Axialanschläge anzugeben.

Die Aufgabe wird durch ein Lager mit den Merkmalen des Hauptanspruchs gelöst. Ein die Aufgabe lösendes Verfahren ist durch die Merkmale des ersten verfahrensbezogenen Anspruchs charakterisiert. Vorteilhafte Aus- beziehungsweise Weiterbildungen der Erfindung sind durch die jeweiligen Unteransprüche gegeben.

Das zur Lösung der Aufgabe vorgeschlagene Buchsenlager, welches mindestens einen radialen und/oder axialen Anschlag aufweist und zur Montage in einem zylinderförmigen Aufnahmeauge vorgesehen ist, besteht aus einem im Wesentlichen zylinderförmigen, metallischen Innenteil, einem das Innenteil umgebenden und mit ihm vorzugsweise durch Vulkanisation verbundenen elastomeren Lagerkörper sowie einer das Innenteil mit dem Lagerkörper aufnehmenden Außenhülse. Die Außenhülse kann ebenfalls durch Vulkanisation mit dem Lagerkörper verbunden sein, wobei dann die Verbindung der vorgenannten Teile, also des Innenteils mit dem Lagerkörper einerseits und des Lagerkörpers mit dem Innenteil andererseits, in einem Vulkanisationsarbeitsgang erfolgt. Erfindungsgemäß ist in der Außenhülse im Bereich zumindest eines ihrer axialen Lagerenden mindestens eine radial nach innen ragende Sicke ausgebildet, welche als radialer und/oder axialer Anschlag fungiert. Dabei wird durch den radial inneren Scheitel der Sicke ein Radialanschlag und/oder durch ihre axial äußere Seitenwand eine Auskragung beziehungsweise eine Umbördelung ausgebildet, deren mit Elastomer bedeckte Außenfläche einen Axialanschlag darstellt. Zur Realisierung eines Axialanschlags ist die Sicke beziehungsweise sind die Sicken vorzugsweise auf dem Umfang der Außenhülse des Lagers umlaufend ausgebildet.

Bei einer bevorzugten, praxisgerechten Ausbildung des erfindungsgemäßen Lagers ist zur Ausbildung eines Axialanschlags an wenigstens einem axialen Ende des Buchsenlagers in dessen Außenhülse eine umlaufende V-förmige Sicke angeordnet, deren axial äußere Seitenwand von der radial nach außen ragenden Umbördelung gebildet ist. Durch diese Umbördelung ist, da sie umlaufend ausgebildet ist, ein Axialflansch realisiert, dessen axial äußere Fläche von dem Elastomer des Lagerkörpers bedeckt ist. Die Sicke ist so tief in das Material der Außenhülse gezogen, dass der Außendurchmesser dieses Axialflansches geringer ist, als der geringste Innendurchmesser eines zur Aufnahme des Lagers bestimmten Aufnahmeauges. Dies bedeutet gleichzeitig, dass der Außendurchmesser dieses Flansches geringer ist als der Außendurchmesser derjenigen Bereiche der Außenhülse, welche bei der Montage des Lagers in dem Aufnahmeauge, an dessen Innenflächen, zur Anlage gelangen. Wie bereits betont, ist bei dieser Ausbildungsform die Außenfläche des Flansches mit dem gleichen Material bedeckt, aus welchem auch der elastomere Lagerkörper besteht. Das Aufbringen des Elastomers auf den Flansch und seine Verbindung mit dessen Außenfläche erfolgt dabei in einem gemeinsamen Arbeitsgang mit der Vulkanisation der übrigen Teile des Lagers. Daher ist bei dieser Ausbildungsform auch die Außenhülse mit dem Lagerkörper durch Vulkanisation verbunden. Die radial nach außen kragende Umbördelung ragt, bezogen auf die Lagerachse, vorzugsweise annähernd in einem rechten Winkel nach außen.

Sofern der Lagerkörper bei der zuletzt beschriebenen Ausbildungsform in dem Bereich der Sicke einen Hohlraum aufweist, sind durch die Sicke gleichzeitig ein Axialanschlag und ein Radialanschlag gebildet. Dabei stellt der Scheitel der Sicke einen Radialanschlag in Bezug auf den durch den Hohlraum für das Elastomer gebildeten radialen Freiweg dar, während der Axialanschlag durch den, von der axial äußeren Seitenwand gebildeten Flansch realisiert ist, welcher mit dem Elastomer bedeckt ist.

Gemäß einer möglichen Weiterbildung der beiden vorbeschriebenen Ausbildungsformen für ein Buchsenlager mit beidseitigem, in erfindungsgemäßer Weise ausgebildetem Axialanschlag, weisen die Axialflansche unterschiedlich große Außendurchmesser auf. Während der Außendurchmesser eines Axialflansches so bemessen ist, dass er durch ein zur Aufnahme des Lagers dienendes Aufnahmeauge hindurchgeführt werden kann, ist der Außendurchmesser des anderen Axialflansches größer als der maximale Innendurchmesser des entsprechenden Aufnahmeauges. Der Axialflansch mit dem vergrößerten Außendurchmesser wirkt dabei bei der Montage des Lagers im Aufnahmeauge gleichzeitig als Einbauanschlag. Zwar führt eine Ausbildung des Innenteils mit unterschiedlichen Außendurchmessern zu einem erhöhten Fertigungsaufwand. Jedoch lassen sich durch eine solche Ausbildung bei dem erfindungsgemäßen Lager, im Falle dessen, das dieses im Bereich der durch die Sicken ausgebildeten Anschläge Hohlräume beziehungsweise Nieren aufweist, die Möglichkeiten zur Beeinflussung der durch die Hohlräume gegebenen Freiwege für das Elastomer erweitern. Daher variiert bei einer weiteren möglichen Ausbildungsform des erfindungsgemäßen Lagers der Außendurchmesser des Innenteils bezogen auf dessen radiale Erstreckung. Selbstverständlich ist es auch möglich, das erfindungsgemäße Buchsenlager als Hydrolager auszulegen, das heißt in seinem elastomeren Lagerkörper Kammern und einen diese verbindenden Überström- oder Drosselkanal für ein fluides Dämpfungsmittel vorzusehen. Weiterhin können zur Einstellung der radialen Kennung in dem elastomeren Lagerkörper Einlegeteile aus Kunststoff oder Metall angeordnet werden.

Zur Realisierung eines Axialanschlages bei einem Buchsenlager wird gemäß der Erfindung folgende Verfahrensweise vorgeschlagen. Die Lagerkomponenten, nämlich das Innenteil, der elastomere Lagerkörper und die Außenhülse, werden zunächst in der üblichen Weise zusammengefügt. Dabei werden das zylinderförmige, metallische Innenteil und das den Lagerkörper ausbildende Elastomer in einem Vulkanisationsprozess verbunden. Vorzugsweise wird die Außenhülse, deren für die Erzeugung des Axialanschlags vorgesehener axialer Rand zuvor umgebördelt worden ist, in dem gleichen Vulkanisationsarbeitsgang mit dem Innenteil verbunden oder aber das Innenteil wird, dazu alternativ, mit dem Lagerkörper nach der Vulkanisation in der Außenhülse montiert. Im letztgenannten Fall muss jedoch die an der Außenhülse vorgesehene Umbördelung in einem separaten Vulkanisationsvorgang auf ihrer Außenfläche mit einem Elastomer versehen werden. Daher werden die Lagerteile vorzugsweise in einem gemeinsamen Vulkanisationsprozess miteinander verbunden und dabei auch die Außenfläche des durch Umbördelung gebildeten Axialflansches mit Elastomer bedeckt. Der Axialflansch ragt vorzugsweise in einem annähernd rechten Winkel zur Lagerachse radial nach außen. Nach dem Zusammenfügen der Lagerteile wird schließlich erfindungsgemäß in die Außenhülse mit einem Gesenk eine Sicke eingepresst, welche so positioniert wird, dass ihre axial äußere Wand der an der Außenhülse vorgesehenen Umbördelung entspricht. Analog werden, bei einem Buchsenlager mit doppelseitigem Axialanschlag, beide axialen Enden der Außenhülse umgebördelt und im Bereich beider dadurch gebildeten Axialflansche jeweils eine Sicke an beschriebener Position eingepresst.

Sofern in dem Lagerkörper im Bereich der zu erzeugenden Sicken Hohlräume oder Nieren ausgebildet sind, werden in diese Hohlräume vorzugsweise für die Dauer des Gesenkpressens Formteile eingelegt, welche als Untergesenk zur Begrenzung der Tiefe der mit dem Gesenkstempel einzubringenden Sicken wirken.

Die Erfindung wird nachfolgend anhand von Ausführungsbeispielen nochmals erläutert. In den zugehörigen Zeichnungen zeigen:
- Fig. 1a:: Eine grundsätzliche Ausbildungsform des erfindungsgemäßen Lagers in einer axial geschnittenen Darstellung
- Fig. 1b:: Das Lager nach Fig. 1a nach der Montage in einem Aufnahmeauge
- Fig. 1c:: Das unter Verzicht auf einen Spacer in einem Aufnahmeauge montierte Lager gemäß Fig. 1a
- Fig. 2:: Eine modifizierte Ausführungsform des erfindungsgemäßen Lagers
- Fig. 3a:: Eine Ausbildungsform des Lagers vor dem Einbringen der Sicken in einem Längsschnitt
- Fig. 3b:: Das Lager gemäß Fig. 3a in einer Draufsicht auf den Axialanschlag
- Fig. 4:: Das Lager nach der Fig. 3a nach dem Einbringen der Sicken
- Fig. 5:: Eine weitere Ausbildungsform des erfindungsgemäßen Lagers
- Fig. 6:: Den Vorgang des Einbringens der Sicken mittels eines Gesenks.

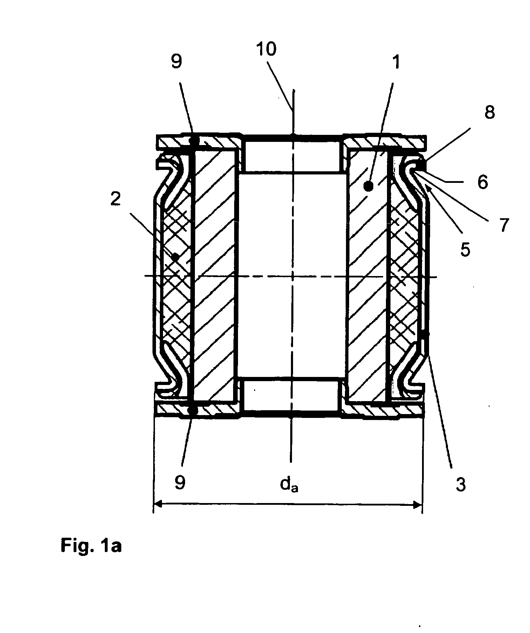

Die Fig. 1a zeigt eine grundsätzliche Ausbildungsform des erfindungsgemäßen Lagers in einer Schnittdarstellung mit einem axial durch das Lager geführten Schnitt. Das Lager besteht im Wesentlichen aus dem metallischen, zylinderförmigen Innenteil 1, den mit dem Innenteil 1 durch Vulkanisation verbundenen elastomeren Lagerkörper 2 und der das Innenteil 1 mit dem Lagerkörper 2 aufnehmenden, ebenfalls metallischen Außenhülse 3. Das Lager ist beidseitig mit einem Axialanschlag ausgestattet. Hierzu ist die Außenhülse 3 als ein so genanntes Doppelflanschteil ausgebildet. Dem Grundgedanken der Erfindung folgend, sind die Axialanschläge jeweils durch eine im Bereich eines axialen Endes in die Außenhülse 3 eingebrachte Sicke 5 ausgebildet. Die jeweils axial äußere Seitenwand 6 der beiden, die Axialanschläge ausbildenden Sicken 5 ist durch die axial innere Fläche einer radial an den Lagerenden nach außen ragenden Umbördelung 8 gebildet. Der durch die Umbördelung 8 gebildete Axialflansch ist auf der Außenseite von dem Elastomer des Lagerkörpers 2 bedeckt und bildet den Axialanschlag aus. Wie zu erkennen, weist das dargestellte Lager im Bereich seiner axialen Enden in dem elastomeren Lagerkörper 2 Hohlräume 11 auf. Diese Nieren 11 dienen der Realisierung spezieller radialer Kennungsverhältnisse. Für das in dieser Weise gestaltete Lager werden durch die Sicken 5 gleichzeitig Axial- und Radialanschläge ausgebildet. Dabei werden die Axialanschläge durch die radial äußeren, als Axialflansch 8 wirkenden Seitenwände 6 der Sicken 5 gebildet, während die Radialanschläge durch die in die Hohlräume 11 hineinragenden Scheitel 7 der Sicken 5 realisiert sind. In ihrer Eigenschaft als Radialanschlag begrenzen die Sicken 5 die, durch die Hohlräume 11 gegebenen Freiwege für das Elastomer.
Zur Montage am vorgesehenen Bestimmungsort sind axial beidseits in das Lager so genannte Spacer 9 beziehungsweise Spacerscheiben eingedrückt. Diese dienen der Schaffung einer definierten Anlagefläche am Einbauort. Zur Montage wird das Lager mit den Axialflanschen 8 und den Spacern 9 in das Lagerauge 4 eingeführt. Dies ist dadurch möglich, dass die Tiefe der Sicken 5 derart bemessen ist, dass der für die Axialflansche 8 resultierende Außendurchmesser da den Außendurchmesser der an den Innenflächen des Auges anliegenden Bereiche der Lagerhülse oder, genauer gesagt, den minimalen Innendurchmesser di des Aufnahmeauges 4 nicht übersteigt. Somit ist ein einteiliges Buchsenlager mit beidseitigem Axialanschlag realisiert, bei dem beide Axialanschläge in gleicher Weise als äußere Lagerflansche 8 ausgebildet sind, welches aber dennoch einfach in einem Aufnahmeauge 4 zu montieren ist, ohne dass es dazu etwa einer axialen Teilung des Lagers bedarf.

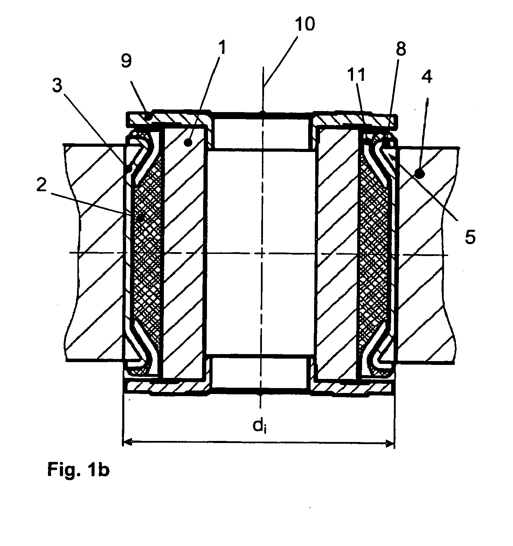

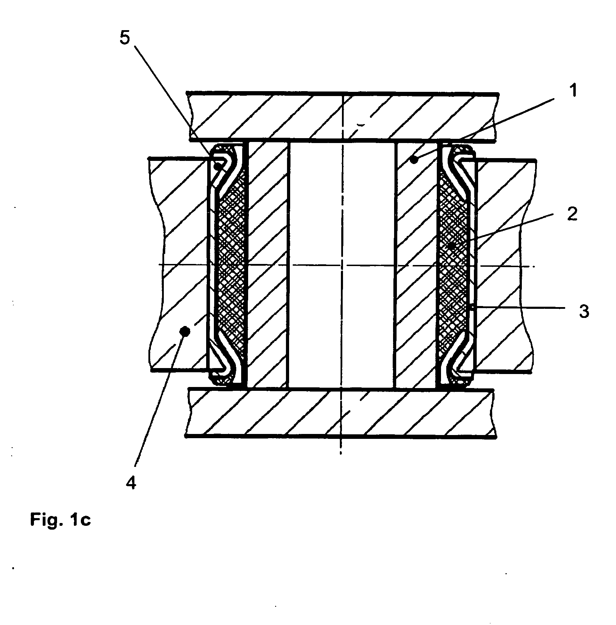

Die Fig. 1b zeigt die entsprechende Einbausituation. Das Lager wird dabei einfach bis zum Erreichen der in der Figur dargestellten Endposition in das entsprechende Aufnahmeauge 4 eingedrückt. Über eine Durchgangsbohrung im Innenteil 1 kann das Lager an einer Anlagefläche verschraubt werden. Soweit dabei die Auflagefläche am bestimmungsgemäßen Einbauort hinreichend groß ist, kann der gemäß der Fig. 1a und 1b vorgesehene Spacer 9 auch entfallen. Die dann gegebene Einbausituation ist durch die Fig. 1c verdeutlicht. Hier liegt das Innenteil 1 des Buchsenlagers ohne Spacer 9 unmittelbar an einer Anlagefläche 13 des Einbauorts an.

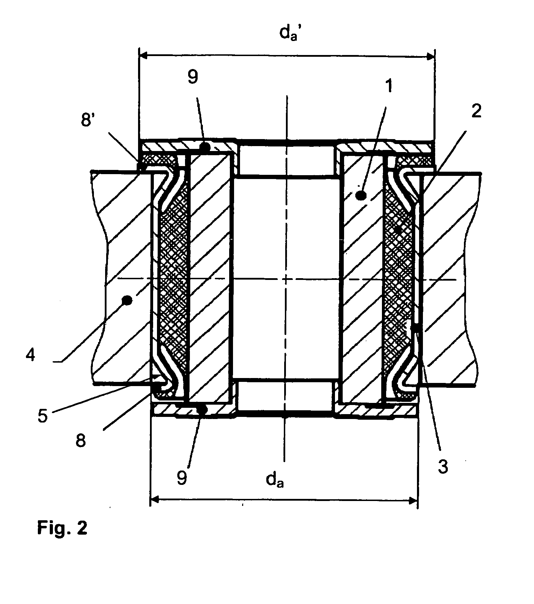

Die Fig. 2 zeigt eine gegenüber der Ausbildungsform gemäß der Fig. 1a bis 1c modifizierte Variante des erfindungsgemäßen Buchsenlagers. Hier sind die Axialflansche 8, 8' so bemessen, dass das Lager nur von einer Seite in das zu seiner Aufnahme vorgesehene Aufnahmeauge 4 eingeführt werden kann. Nur bei einem Axialflansch 8 ist der Außendurchmesser da geringer, als der Innendurchmesser di des Aufnahmeauges 4. Dem gegenüber ist der andere äußere Axialflansch 8' bewusst mit einem größeren Durchmesser da' ausgebildet, so dass er bei der Montage des Lagers in dem Aufnahmeauge 4 einen Bauanschlag ausbildet. Auch der größere Axialflansch 8' beziehungsweise der entsprechende Axialanschlag ist jedoch, gemäß der Erfindung, so ausgebildet, dass seine axial innere Fläche durch die Seitenwand einer Sicke 5 gebildet ist.

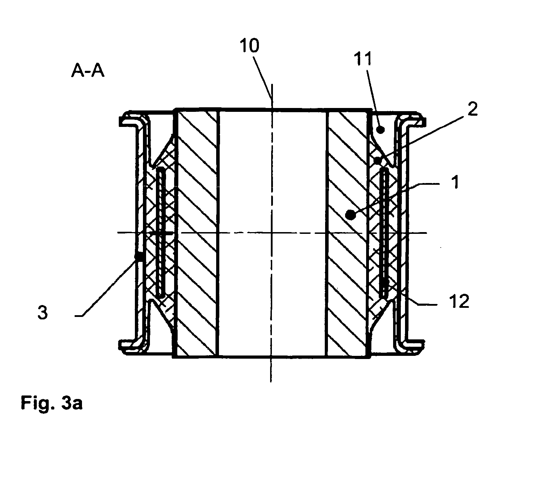

Die Fig. 3a zeigt eine weitere Ausgestaltungsmöglichkeit des Buchsenlagers vor dem Einbringen der Sicken 5. Auch hier ist die Außenhülse als Doppelflanschteil ausgebildet. Allerdings sind bei dieser Ausbildungsform, abweichend gegenüber der in den Fig. 1a bis 1c gezeigten, zur Realisierung von Bereichen mit einer härteren radialen Kennung Einlegeelemente 12 aus Metall oder Kunststoff in den elastomeren Lagerkörper 2 eingefügt.

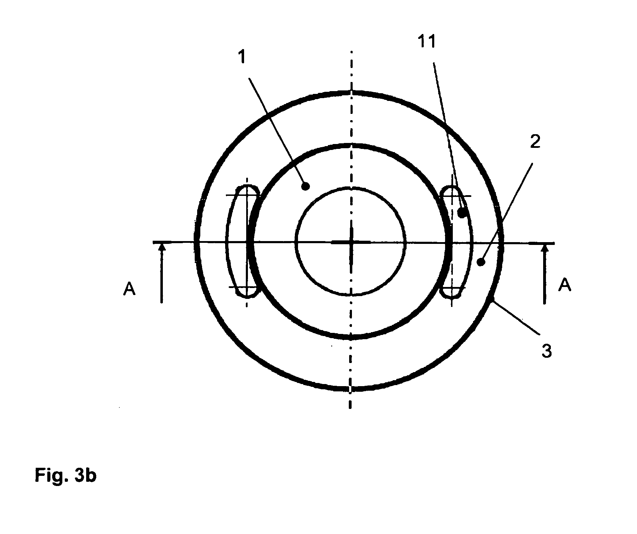

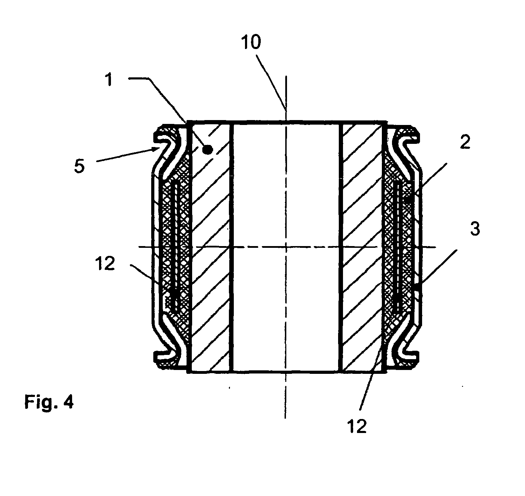

Die Fig. 3b zeigt das Lager nochmals in einer Draufsicht auf eines seiner axialen Enden, während die Fig. 4 das Lager gemäß Fig. 3a nach dem Einbringen der Sicken 5 zeigt.

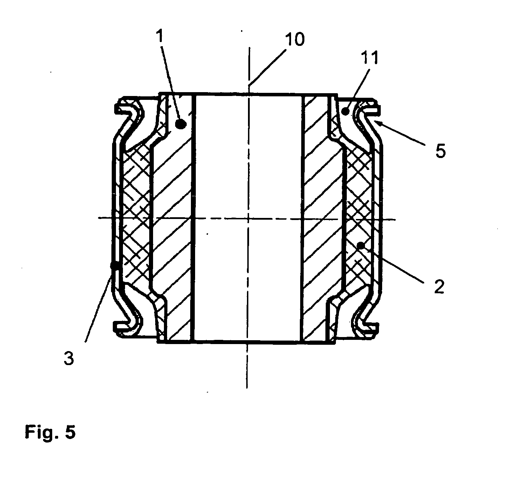

In der Fig. 5 ist eine weitere mögliche Ausbildungsform des erfindungsgemäßen Lagers gezeigt. Bei dieser Ausführungsform weist das zylinderförmige Innenteil 1 an seinen axialen Enden einen gegenüber dem mittleren Bereich geringeren Außendurchmesser auf. Unter Beibehaltung des erfinderischen Prinzips sind auch bei diesem Lager durch Sicken 5 im Bereich der axialen Lagerenden Anschläge ausgebildet, welche gleichzeitig als Axial- und Radialanschlag fungieren. Dabei kann der Radialanschlag durch die Formgebung des Innenteils in Verbindung mit der Tiefe der im Zuge der so genannten Kalibrierung, also der Erzeugung einer definierten Vorspannung im elastomeren Lagerkörper, eingebrachten Sicken 5 sehr variabel eingestellt werden.

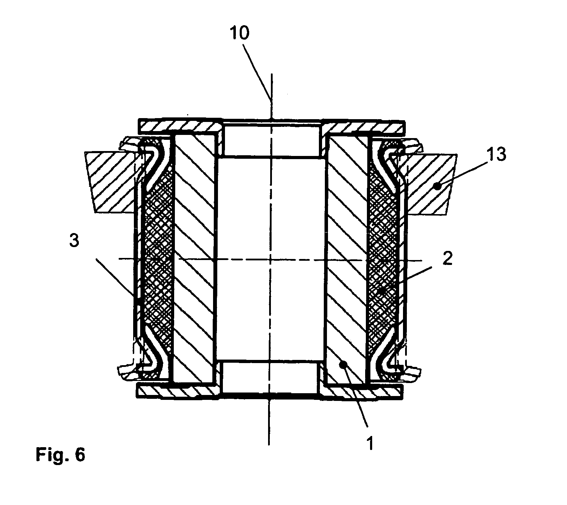

In der Fig. 6 ist der Kalibriervorgang beziehungsweise der Vorgang des Einbringens der Sicken 5 mittels eines Gesenks 13 dargestellt. Die Sicken 5 werden bei einem zunächst entsprechend der Fig. 3a (hier jedoch ohne Einlegeteile) ausgebildeten Lager mittels der V-förmigen Spitze eines Gesenks 13 eingebracht. Durch diesen Vorgang wird einerseits eine Vorspannung im elastomeren Lagerkörper 2 erzeugt, andererseits wird der äußere Rand der Umbördelung 8 radial nach innen bewegt, so dass sich der Außendurchmesser da des jeweiligen Axialflansches 8 verringert. Das heißt die Festlegung des Außendurchmessers des Axialflansches und die Vorspannung des Lagerkörpers erfolgen in einem gemeinsamen Kalibriervorgang. Durch eine entsprechende Bemessung der Tiefe der Sicken 5 wird dabei vorzugsweise der Außendurchmesser da beider Axialflansche 8, beziehungsweise wenigstens der Außendurchmesser da eines Axialflansches 8 bis auf einen Durchmesser verringert, welcher geringer ist als der der übrigen Bereiche der Außenhülse beziehungsweise geringer als der minimale Innendurchmesser di eines zur Aufnahme des Lagers bestimmten Lagerauges 4. Das Lager kann somit problemlos in ein Aufnahmeauge 4 eingefügt werden.

### Bezugszeichenliste

- 1: Innenteil
- 2: (elastomerer) Lagerkörper
- 3: Außenhülse
- 4: Aufnahmeauge
- 5: Sicke
- 6: Seitenwand
- 7: Scheitel
- 8, 8': Umbördelung, Axialflansch
- 9: Spacer
- 10: Lagerachse
- 11: Hohlraum, Niere
- 12: Einlegeteil
- 13: Gesenk

- da: Außendurchmesser
- di: Innendurchmesser

## Patentansprüche

1. Buchsenlager mit mindestens einem radialen und/oder axialen Anschlag, welches für eine Montage in einem zylinderförmigen Aufnahmeauge (4) ausgebildet ist und aus einem zylinderförmigen, metallischen Innenteil (1), einem das Innenteil umgebenden und mit ihm durch Vulkanisation verbundenen elastomeren Lagerkörper (2) sowie einer das Innenteil (1) mit dem Lagerkörper (2) aufnehmenden Außenhülse (3) besteht, wobei in der Außenhülse (3) im Bereich zumindest eines der axialen Lagerenden mindestens eine radial nach innen ragende Sicke (5) ausgebildet ist und deren äußere Seitenwand (6) durch eine Umbördelung (8) ausgebildet ist, deren mit Elastomer bedeckte Außenfläche einen Axialanschlag darstellt, **dadurch gekennzeichnet, dass**
die Sicke einen radial inneren Scheitel (7)aufweist, der einen Radialanschlag ausbildet, wobei der elastomere Lagerkörper (2) in dem Bereich der Sicke (5) einen Hohlraum (11) aufweist und der Scheitel (7) der Sicke (5) den ihm Hohlraum (11) gebildeten radialen Freiweg begrenzt.

2. Buchsenlager nach Anspruch 1, **dadurch gekennzeichnet, dass** die Sicke (5) zur Realisierung eines Axialanschlags auf dem Umfang der Außenhülse (3) umlaufend ausgebildet ist.

3. Buchsenlager nach Anspruch 2, **dadurch gekennzeichnet, dass** zur Ausbildung eines Axialanschlags an wenigstens einem axialen Ende des Buchsenlagers in dessen Außenhülse (3) eine umlaufende V-förmige Sicke (5) angeordnet ist, deren axial äußere Seitenwand (6) von einer radial nach außen ragenden Umbördelung (8) gebildet ist, wobei die Sicke (5) so tief in das Material der Außenhülse (3) gezogen ist, dass die an sie angrenzende Umbördelung (8), deren axial äußere Fläche von dem Elastomer des Lagerkörpers (2) bedeckt ist, einen als Axialanschlag wirkenden Axialflansch (8) ausbildet, dessen Außendurchmesser (da) geringer ist, als der minimale Innendurchmesser (di) eines für die Aufnahme des Lagers bestimmten Aufnahmeauges (4).

4. Buchsenlager nach Anspruch 3, **dadurch gekennzeichnet, dass** die Umbördelung (8), bezogen auf die Lagerachse (10), annähernd in einem rechten Winkel radial nach außen ragt.

5. Buchsenlager nach einem der Ansprüche 3 bis 4, **dadurch gekennzeichnet, dass** das Buchsenlager in Axialrichtung betrachtet beidseitig einen Axialflansch (8, 8') als Axialanschlag aufweist und der Außendurchmesser (da') eines Axialflansches (8') größer ist, als der maximale Innendurchmesser (di) des zur Aufnahme des Lagers bestimmten Aufnahmeauges (4), so dass durch diesen Axialflansch (8') in Bezug auf die Montage des Lagers in dem Aufnahmeauge (4) ein Einbauanschlag gebildet ist.

6. Buchsenlager nach einem der Ansprüche 1 bis 5, **dadurch gekennzeichnet, dass** der Außendurchmesser des Innteils (1) entlang seiner axialen Erstreckung variiert.

7. Buchsenlager nach einem der Ansprüche 1 bis 6, **dadurch gekennzeichnet, dass** in dem elastomeren Lagerkörper (2) Kammern für ein fluides Dämpfungsmittel und ein die Kammern verbindender Überström- oder Drosselkanal ausgebildet sind.

8. Buchsenlager nach einem der Ansprüche 1 bis 7, **dadurch gekennzeichnet, dass** zur Beeinflussung der radialen Kennung in den elastomeren Lagerkörper Einlegeteile (12) aus Kunststoff oder Metall eingefügt sind.

9. Verfahren zur Erzeugung eines Axialanschlags bei einem Buchsenlager, welches aus einem im Wesentlichen zylinderförmigen, metallischen Innenteil (1), einem das Innenteil (1) umgebenden und mit ihm durch Vulkanisation verbundenen elastomeren Lagerkörper (2) sowie einer das Innenteil (1) mit dem Lagerkörper (2) aufnehmenden Außenhülse (3) besteht, **dadurch gekennzeichnet, dass** an dem zur Ausbildung des Axialanschlags vorgesehenen axialen Ende der Außenhülse (3) vor der Montage des Innenteils (1) mit dem Lagerkörper (2) eine Umbördelung (8) erzeugt und nach dem Einfügen von Innenteil (1) und Lagerkörper (2) mittels eines Gesenks (13) eine annähernd V-förmige Sicke (5) in die Außenhülse (3) eingebracht wird, um einen Radialanschlag zum Innenteil (1) auszubilden, wobei der elastomere Lagerkörper (2) in dem Bereich der Sicke (5) einen Hohlraum (11) aufweist und wobei die Sicke (5) so ausgeformt und platziert wird, dass die zuvor erzeugt Umbördelung (8) die axiale äußere Seitenwand (6) der Sicke ausbildet und die Außenfläche der Umbördelung mit Elastomer bedeckt wird.

10. Verfahren nach Anspruch 9, **dadurch gekennzeichnet, dass** der mit dem Innenteil (1) verbundene Lagerkörper (2) durch Vulkanisation außerdem mit der Außenhülse (3) verbunden wird, wobei die Bedeckung der Außenfläche der Umbördelung (8) mit dem Elastomer und die Verbindung des Innenteils (1) mit dem elastomeren Lagerkörper (2) sowie die Verbindung des Lagerkörpers (2) mit der Außenhülse (3) in einem gemeinsamen Vulkanisationsvorgang erfolgen.

11. Verfahren nach Anspruch 9 oder 10, **dadurch gekennzeichnet, dass** bei einem Buchsenlager, dessen elastomerer Lagerkörper (2) im Bereich des zu erzeugenden Axialanschlags einen Hohlraum (11) oder eine Niere aufweist, für die Dauer des Gesenkpressens zur Begrenzung der Tiefe der mit dem Gesenkstempel eingebrachten Sicke (5) ein als Untergesenk wirkendes Formteil eingelegt wird.

## Claims

1. Sleeve bearing having at least one radial and/or axial stop, said sleeve bearing being designed for mounting in a cylindrical receiving lug (4) and being composed of a cylindrical, metallic inner part (1), an elastomeric bearing body (2) which surrounds the inner part and which is connected thereto by vulcanization, and an outer sleeve (3) which receives the inner part (1) with the bearing body (2), wherein at least one radially inwardly projecting bead (5) is formed in the outer sleeve (3) in the region of at least one of the axial bearing ends, and the outer side wall (6) of said bead is formed by a flanged portion (8), the elastomer-covered outer surface of which forms an axial stop,
**characterized in that**
the bead has a radially inner apex (7) which forms a radial stop, wherein the elastomeric bearing body (2) has a cavity (11) in the region of the bead (5), and the apex (7) of the bead (5) delimits the radial free travel formed in the cavity (11).

2. Sleeve bearing according to Claim 1, **characterized in that** the bead (5) is of encircling design so as to realize an axial stop over the circumference of the outer sleeve (3).

3. Sleeve bearing according to Claim 2, **characterized in that**, to form an axial stop, on at least one axial end of the sleeve bearing there is arranged in the outer sleeve (3) thereof an encircling V-shaped bead (5), the axially outer side wall (6) of which is formed by a radially outwardly projecting flanged portion (8), wherein the bead (5) extends into the material of the outer sleeve (3) to such a depth that the flanged portion (8), which adjoins said bead and the axially outer surface of which is covered by the elastomer of the bearing body (2), forms an axial flange (8) which acts as an axial stop and whose outer diameter (da) is smaller than the minimum inner diameter (di) of a receiving lug (4) designed for receiving the bearing.

4. Sleeve bearing according to Claim 3, **characterized in that** the flanged portion (8) projects radially outwards approximately at right angles in relation to the bearing axis (10).

5. Sleeve bearing according to either of Claims 3 and 4, **characterized in that** the sleeve bearing has an axial flange (8, 8') as an axial stop at both sides as viewed in the axial direction, and the outer diameter (da') of one axial flange (8') is greater than the maximum inner diameter (di) of the receiving lug (4) provided for receiving the bearing, such that said axial flange (8') forms an installation stop for the mounting of the bearing in the receiving lug (4).

6. Sleeve bearing according to one of Claims 1 to 5, **characterized in that** the outer diameter of the inner part (1) varies along the axial extent thereof.

7. Sleeve bearing according to one of Claims 1 to 6, **characterized in that** chambers for a fluid damping medium, and a transfer or throttling duct which connects the chambers, are formed in the elastomeric bearing body (2).

8. Sleeve bearing according to one of Claims 1 to 7, **characterized in that**, to influence the radial characteristic, insert parts (12) composed of plastic or metal are inserted into the elastomeric bearing body.

9. Method for producing an axial stop in a sleeve bearing which is composed of a substantially cylindrical, metallic inner part (1), an elastomeric bearing body (2) which surrounds the inner part (1) and which is connected thereto by vulcanization, and an outer sleeve (3) which receives the inner part (1) with the bearing body (2), **characterized in that**, before the mounting of the inner part (1) with the bearing body (2), a flanged portion (8) is generated on that axial end of the outer sleeve (3) which is intended to form the axial stop, and after the inner part (1) and bearing body (2) have been inserted, an approximately V-shaped bead (5) is formed into the outer sleeve (3) by means of a die (13) in order to form a radial stop with respect to the inner part (1), wherein the elastomeric bearing body (2) has a cavity (11) in the region of the bead (5), and wherein the bead (5) is formed and situated such that the previously generated flanged portion (8) forms the axial outer side wall (6) of the bead, and the outer surface of the flanged portion is covered with elastomer.

10. Method according to Claim 9, **characterized in that** the bearing body (2) which is connected to the inner part (1) is connected by vulcanization also to the outer sleeve (3), wherein the covering of the outer surface of the flanged portion (8) with the elastomer and the connection of the inner part (1) to the elastomeric bearing body (2) and the connection of the bearing body (2) to the outer sleeve (3) take place in a common vulcanization process.

11. Method according to Claim 9 or 10, **characterized in that**, in the case of a sleeve bearing whose elastomeric bearing body (2) has a cavity (11) or a kidney in the region of the axial stop to be generated, a shaped part which acts as a bottom die is inserted for the duration of the die pressing process in order to limit the depth of the bead (5) formed by means of the die punch.

## Revendications

1. Palier manchon comprenant au moins une butée radiale et/ou axiale, qui est réalisé pour un montage dans un oeillet de réception cylindrique (4) et qui se compose d'une partie intérieure métallique cylindrique (1), d'un corps de palier (2) élastomère entourant la partie intérieure et raccordé à celle-ci par vulcanisation, ainsi qu'une douille extérieure (3) recevant la partie intérieure (1) avec le corps de palier (2), au moins une moulure (5) saillant radialement vers l'intérieur étant réalisée dans la douille extérieure (3) dans la région d'au moins l'une des extrémités de palier axiales et sa paroi latérale extérieure (6) étant réalisée par un rabattage (8) dont la surface extérieure revêtue d'élastomère constitue une butée axiale,
**caractérisé en ce que**
la moulure présente un sommet radialement interne (7) qui constitue une butée radiale, le corps de palier élastomère (2) présentant dans la région de la moulure (5) une cavité (11) et le sommet (7) de la moulure (5) limitant la course libre radiale formée dans la cavité (11).

2. Palier manchon selon la revendication 1, **caractérisé en ce que** la moulure (5) est réalisée sous forme périphérique pour réaliser une butée axiale sur la périphérie de la douille extérieur (3).

3. Palier manchon selon la revendication 2, **caractérisé en ce que** pour réaliser une butée axiale sur au moins une extrémité axiale du palier manchon, une moulure (5) périphérique en forme de V est disposée dans sa douille extérieure (3), la paroi latérale (6) axialement externe de la moulure étant formée par un rabattage (8) saillant radialement vers l'extérieur, la moulure (5) étant emboutie si profondément dans le matériau de la douille extérieure (3) que le rabattage (8) adjacent à celle-ci, dont la surface axialement externe est revêtue par l'élastomère du corps de palier (2), constitue une bride axiale (8) agissant en tant que butée axiale, dont le diamètre extérieur (da) est plus petit que le diamètre intérieur minimal (di) d'un oeillet de réception (4) prévu pour recevoir le palier.

4. Palier manchon selon la revendication 3, **caractérisé en ce que** le rabattage (8), par rapport à l'axe du palier (10), fait saillie radialement vers l'extérieur approximativement à angle droit.

5. Palier manchon selon l'une quelconque des revendications 3 et 4, **caractérisé en ce que** le palier manchon, considéré dans la direction axiale, présente en tant que butée axiale des deux côtés une bride axiale (8, 8'), et le diamètre extérieur (da') d'une bride axiale (8') est supérieur au diamètre intérieur maximal (di) de l'oeillet de réception (4) prévu pour recevoir le palier, de sorte que cette bride axiale (8') forme par rapport au montage du palier dans l'oeillet de réception (4) une butée d'assemblage.

6. Palier manchon selon l'une quelconque des revendications 1 à 5, **caractérisé en ce que** le diamètre extérieur de la partie intérieure (1) varie le long de son étendue axiale.

7. Palier manchon selon l'une quelconque des revendications 1 à 6, **caractérisé en ce que** dans le corps de palier élastomère (2) sont réalisés des chambres pour un fluide d'amortissement et un canal de trop-plein ou d'étranglement reliant les chambres.

8. Palier manchon selon l'une quelconque des revendications 1 à 7, **caractérisé en ce que** pour influencer la caractéristique radiale, des pièces d'insertion (12) en plastique ou en métal sont insérées dans le corps de palier élastomère.

9. Procédé pour réaliser une butée axiale dans un palier manchon, qui se compose d'une partie intérieure métallique substantiellement cylindrique (1), d'un corps de palier (2) élastomère entourant la partie intérieure (1) et raccordé à celle-ci par vulcanisation, ainsi que d'une douille extérieure (3) recevant la partie intérieure (1) avec le corps de palier (2), **caractérisé en ce qu'**à l'extrémité axiale de la douille extérieure (3) prévue pour réaliser la butée axiale, avant le montage de la partie intérieure (1) avec le corps de palier (2), est réalisé un rabattage (8) et qu'après l'assemblage de la partie intérieure (1) et du corps de palier (2) au moyen d'une matrice (13) une moulure (5) approximativement en forme de V est pratiquée dans la douille extérieure (3), afin de constituer une butée radiale pour la partie intérieure (1), le corps de palier élastomère (2) présentant une cavité (11) dans la région de la moulure (5), et la moulure (5) étant formée et placée de telle sorte que le rabattage (8) réalisé préalablement constitue la paroi latérale axiale extérieure (6) de la moulure et que la surface extérieure du rabattage soit revêtue d'élastomère.

10. Procédé selon la revendication 9, **caractérisé en ce que** le corps de palier (2) raccordé à la partie intérieure (1) est en outre raccordé à la douille extérieure (3) par vulcanisation, le revêtement de la surface extérieure du rabattage (8) avec l'élastomère et la liaison de la partie intérieure (1) au corps de palier élastomère (2) ainsi que la liaison du corps de palier (2) à la douille extérieure (3) s'effectuant dans une opération de vulcanisation commune.

11. Procédé selon la revendication 9 ou 10, **caractérisé en ce que** dans le cas d'un palier manchon, dont le corps de palier élastomère (2) présente, dans la région de la butée axiale à réaliser, une cavité (11) ou un creux en haricot, une pièce moulée agissant en tant que matrice inférieure est introduite pendant la durée du pressage par matrice pour limiter la profondeur de la moulure (5) pratiquée avec le poinçon de matrice.
